# EUROPEAN PATENT APPLICATION

(11) **EP 4 514 001 A1**
(43) Date of publication of application: **26.02.2025**
(21) Application number: 22938408.6
(22) Date of filing: 18.04.2022
(51) Int. Cl.: H04W 72/04

(54) **INSTRUCTION FOR START OF ARTIFICIAL INTELLIGENCE AND/OR MACHINE LEARNING TO TERMINAL DEVICE BY BASE STATION DEVICE**

(71) Applicant: Rakuten Mobile, Inc., Tokyo 158-0094 (JP)
(72) Inventor: LEE Taewoo, Tokyo 158-0094 (JP); MUHAMMAD Awn, Tokyo 158-0094 (JP)
(74) Representative: Betten & Resch
(86) International application number: PCT/JP2022/018044
(87) International publication number: WO 2023/203605

(57) **Abstract**

The present disclosure relates to an instruction from a base station apparatus causing a terminal device to start artificial intelligence and/or machine learning. The terminal device includes: a reception unit that receives a signal for instructing start of training; and a transmission unit that transmits training data, in which the signal for instructing the start of the training includes a training start timing and a training period, and in a case where the signal for instructing the start of the training is received, the training data is generated based on the training start timing and the training period. The base station apparatus includes: a transmission unit that transmits a signal for instructing start of training; and a reception unit that receives training data, in which the signal for instructing the start of the training includes a training start timing and a training period, and in a case where the signal for instructing the start of the training is transmitted, the training data is instructed to be generated based on the training start timing and the training period (Fig. 6).

## Description

### [TECHNICAL FIELD]

The present disclosure relates to an instruction from a base station apparatus causing a terminal device to start artificial intelligence and/or machine learning.

### [BACKGROUND ART]

The 4th generation mobile communication system (4G) is also referred to as Long Term Evolution, or LTE, and the 5th generation mobile communication system (5G) is also referred to as New Radio Access Technology, or NR. LTE and NR have been discussed in the 3rd Generation Partnership Project (3GPP), and standardization have been studied.

A base station apparatus may have one or more cells. A plurality of cells may exist in a range of a radio wave emitted by the base station apparatus. Communication in one or a plurality of the cells may be referred to as cellular communication. A terminal device and the base station apparatus may transmit and receive data by using the cellular communication.

In the 5th generation mobile communication system, enhanced mobile broadband (eMBB) evolved from highspeed and high-capacity (mobile broadband) data communication in a mobile communication system of the related art, ultra reliable and low latency communications (URLLC), and massive machine type communications (mMTC) are adopted.

### [SUMMARY OF INVENTION]

### [TECHNICAL PROBLEM]

An object of the present disclosure is to provide a method in which a base station apparatus instructs a terminal device to start artificial intelligence and/or machine learning. In 3GPP, it is considered to perform channel estimation by using artificial intelligence and/or machine learning in the terminal device and/or the base station apparatus. However, a base station apparatus characterized in that the base station apparatus signals the terminal device to start the artificial intelligence and/or the machine learning, a terminal device, a method of being implemented by the base station apparatus, or a method of being implemented by the terminal device is not known.

### [SOLUTION TO PROBLEM]

(1) In order to achieve the above-described object, aspects of the present disclosure take the following measures. That is, according to a first aspect of the present disclosure, there is provided a terminal device including: a reception unit that receives a signal for instructing start of training; and a transmission unit that transmits training data, in which the signal for instructing the start of the training includes a training start timing and a training period, and in a case where the signal for instructing the start of the training is received, the training data is generated based on the training start timing and the training period.
(2) According to a second aspect of the present disclosure, there is provided a base station apparatus including: a transmission unit that transmits a signal for instructing start of training; and a reception unit that receives training data, in which the signal for instructing the start of the training includes a training start timing and a training period, and in a case where the signal for instructing the start of the training is transmitted, the training data is instructed to be generated based on the training start timing and the training period.
(3) According to a third aspect of the present disclosure, there is provided a communication method used in a terminal device, in which a processing unit that processes a signal for instructing start of training and a processing unit that processes training data are provided, the signal for instructing the start of the training includes a training start timing and a training period, and in a case where the signal for instructing the start of the training is received, the training data is generated based on the training start timing and the training period.
(4) According to a fourth aspect of the present disclosure, there is provided a communication method used in a base station apparatus, in which a processing unit that processes a signal for instructing start of training and a processing unit that processes training data are provided, the signal for instructing the start of the training includes a training start timing and a training period, and in a case where the signal for instructing the start of the training is transmitted, the training data is instructed to be generated based on the training start timing and the training period.

### [ADVANTAGEOUS EFFECTS OF INVENTION]

According to the present disclosure, the communication can be efficiently performed between the base station apparatus and the terminal device.

### [BRIEF DESCRIPTION OF DRAWINGS]

Fig. 1 is a diagram illustrating an example in which a terminal device and a base station apparatus according to the present embodiment perform communication.
Fig. 2 is an example of a conceptual block diagram illustrating a configuration of a terminal device 1 according to the present embodiment.
Fig. 3 is a diagram illustrating an example of a relationship between a supportable numerology and a cyclic prefix in the present embodiment.
Fig. 4 is a diagram illustrating a relationship among SCS, a slot, a frame, and a subframe according to the present embodiment.
Fig. 5 is a diagram illustrating an example of a resource grid according to the present embodiment.
Fig. 6 is a diagram illustrating an example of a training method in a case where a higher layer parameter trainingType is configured as aperiodic in the present embodiment.
Fig. 7 is a diagram illustrating an example of a training method in a case where a higher layer parameter trainingType is configured as semi-persistent in the present embodiment.
Fig. 8 is a diagram illustrating an example of a training method in a case where a higher layer parameter trainingType is configured as periodic in the present embodiment.
Fig. 9 is a diagram illustrating an example of a training method in a case where a higher layer parameter trainingType is configured as instantaneous in the present embodiment.

### [DESCRIPTION OF EMBODIMENTS]

A terminal device may be a device that communicates with a base station apparatus. The terminal device may be referred to as a user equipment (UE). The base station apparatus may be referred to as a base station.

In LTE, the base station apparatus is referred to as an evolved NodeB (eNodeB) or an eNB. In NR, the base station apparatus is referred to as a gNodeB or a gNB.

Communication from the base station apparatus toward the terminal device may be referred to as downlink. The downlink may include a frequency, a signal, and/or data, which is emitted from the base station apparatus toward the terminal device. A communication method in the downlink may be a wireless communication method.

Communication from the terminal device toward the base station apparatus may be referred to as uplink. The uplink may include a frequency, a signal, and/or data, which is emitted from the terminal device toward the base station apparatus. A communication method in the uplink may be a wireless communication method.

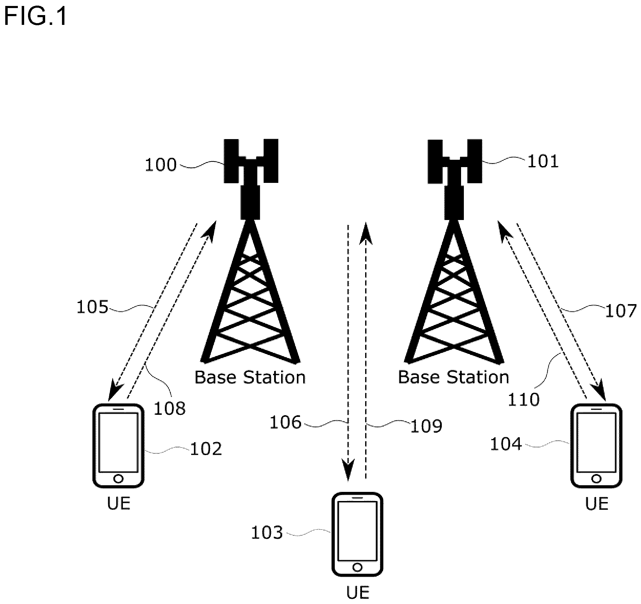

Fig. 1 is a diagram illustrating an example in which the terminal device and the base station apparatus according to the present embodiment perform communication. A base station apparatus 100 and a base station apparatus 101 may be referred to as a base station apparatus 1 or a base station apparatus. A terminal device 102, a terminal device 103, and a terminal device 104 may be referred to as a terminal device 1 or a terminal device. Reference numerals 105, 106, and 107 indicating a communication direction from the base station apparatus 1 to the terminal device 1 may denote downlink. Reference numerals 108, 109, and 110 indicating a communication direction from the terminal device 1 to the base station apparatus 1 may be uplink.

The base station apparatus 1 may configure one or both of a master cell group (MCG) and/or a secondary cell group (SCG). The SCG may be configured as one or more SCGs, or may not be configured. The MCG includes at least a primary cell (PCell). The SCG includes at least a primary secondary cell (PSCell).

The base station apparatus 1 may provide configuration parameters to the MCG included in a higher layer parameter CellGroupConfig. The base station apparatus 1 may provide configuration parameters to the SCG included in the higher layer parameter CellGroupConfig.

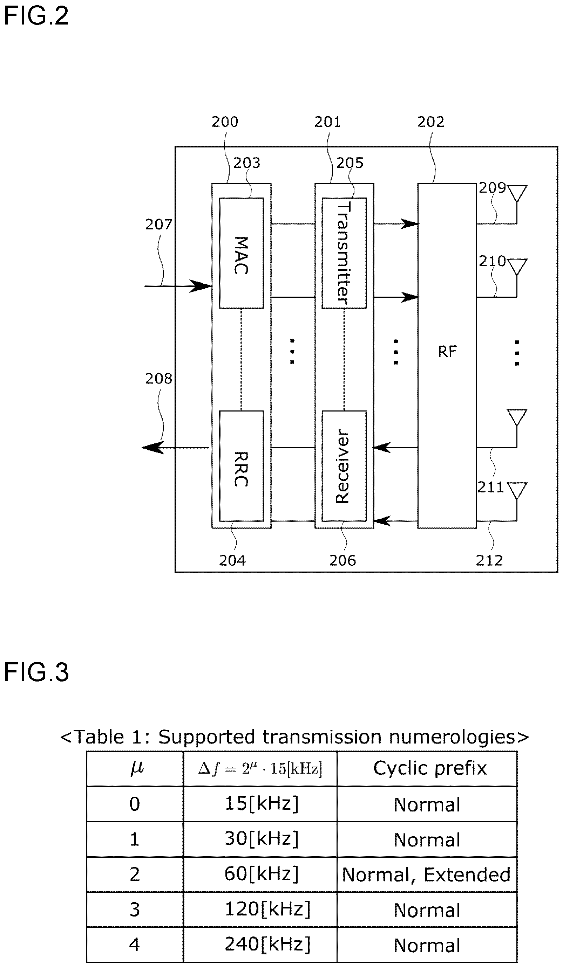

Fig. 2 is an example of a conceptual block diagram illustrating a configuration of the terminal device 1 according to the present embodiment. A block 200 is a higher layer processing unit. A block 201 is a baseband signal processing unit that processes a baseband signal. A block 202 is an RF unit that up-converts a baseband signal into a carrier. Reference numerals 209, 210, 211, and 212 denote antennas that transmit and/or receive a radio wave.

The higher layer processing unit 200 may include a medium access controller 203 and a radio resource controller 204.

The medium access controller 203 may perform medium access control (MAC). The medium access controller 203 may be a protocol existing in the terminal device 1 and the base station apparatus 1. The medium access controller 203 may map a logical channel and a transport channel. The medium access controller 203 may perform logical channel multiplexing. The medium access controller 203 may handle Hybrid Automatic Repeat reQuest (HARQ). The media access controller may perform processing for a MAC layer.

The radio resource controller 204 may perform radio resource control (RRC). The radio resource controller 204 may perform management for broadcast information, management for paging, RRC connection control, security handling, radio bearer management, mobility management, management for Quality Of Service (QOS), and the like. The radio resource controller 204 may perform processing for an RRC layer.

The higher layer processing unit 200 processes and manages configuration information regarding transmission and reception, the configuration information being received from the base station apparatus 1. The configuration information is referred to as a higher layer parameter. The higher layer parameter may include at least a medium access control control element (MAC CE) and a radio resource control parameter (RRC parameter). Furthermore, the higher layer parameter may be a higher layer signalling.

A subcarrier spacing (SCS) may be adjusted to µ. A configuration parameter of the subcarrier spacing may be referred to as µ. The subcarrier spacing (Δf) may have a relationship of Δf = 2^{µ} × 15 kHz. In a case where there are a plurality of configuration parameters µ of the subcarrier spacing, it may mean that the subcarrier spacing has a plurality of numerologies.

A cyclic prefix (CP) may be a guard interval provided to correct multipath interference caused by to latency in a channel. The cyclic prefix may have a different length in accordance with a channel state. A higher layer parameter cyclicPrefix may indicate whether or not to use an extended cyclic prefix in a certain bandwidth part (BWP). The base station apparatus 1 may indicate a length of the cyclic prefix to the terminal device 1 with the higher layer parameter cyclicPrefix. The terminal device 1 may configure the length of the cyclic prefix in accordance with a value of the higher layer parameter cyclicPrefix. The length of the cyclic prefix may be defined by Normal and Extended. The length of the Extended cyclic prefix may be longer than the length of the Normal cyclic prefix.

Fig. 3 is a diagram illustrating an example of a relationship between a supportable numerology and the cyclic prefix in the present embodiment. In a case where µ is zero, the subcarrier spacing is 15 kHz, and the length of the cyclic prefix may be Normal. In a case where µ is one, the subcarrier spacing is 30 kHz, and the length of the cyclic prefix may be Normal. In a case where µ is two, the subcarrier spacing is 60 kHz, and the length of the cyclic prefix may be Normal or Extended. In a case where µ is set to two and the higher layer parameter cyclicPrefix is set to Extended, the terminal device 1 may configure the length of the Cyclic Prefix to Extended. In a case where µ is set to two and the higher layer parameter cyclicPrefix is not set, the terminal device 1 may configure the length of the Cyclic Prefix to Normal. In a case where µ is three, the subcarrier spacing is 120 kHz, and the length of the cyclic prefix may be Normal. In a case where µ is four, the subcarrier spacing is 240 kHz, and the length of the cyclic prefix may be Normal. 1 kHz is 1000 Hz.

For the configuration µ of the SCS, one or more slots may be numbered in an increasing order in one subframe. That is, a slot number nₛ^{µ} may have a relationship of nₛ^{µ} = {0, ···, Nₛₗₒₜ^{subframe, µ-}1}. Here, Nₛₗₒₜ^{subframe, µ} may represent the number of slots included in one subframe for the configuration µ of the SCS. For the configuration µ of the SCS, one or more slots may be numbered in an increasing order in one frame. That is, slot numbers n_{s, f^{µ}} may have a relationship of nₛ, _{f}^{µ} = {0**,** ···, Nₛₗₒₜ^{frame, µ}-1}. Here, Nₛₗₒₜ^{frame, µ} may represent the number of slots included in one frame for the configuration µ of the SCS.

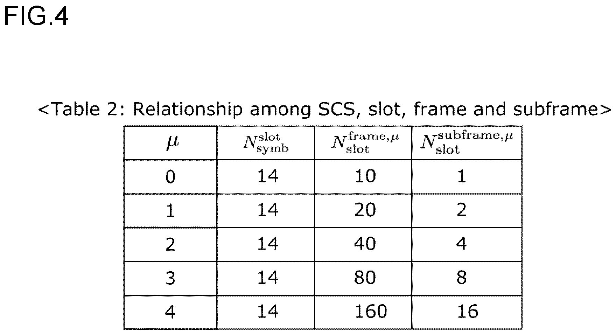

Fig. 4 is a diagram illustrating a relationship among the SCS, the slot, the frame, and the subframe according to the present embodiment. One slot may include N_{symb}^{slot} symbols. The number N_{symb}^{slot} of slots included in one slot may differ depending on the type of CP. In a case where the CP is configured as Normal, N_{symb}^{slot} may be 14 regardless of a value of the SCS. In a case where the CP is configured as Extended, N_{symb}^{slot} may be 12.

The duration of one frame may be 10 ms regardless of the SCS. 1 ms is 1/1000 seconds. The number of slots included in one frame may differ depending on the SCS. For example, in a case where the SCS is 15 kHz (µ = 0), the number Nₛₗₒₜ^{frame, µ} of slots included in one frame may be 10. Furthermore, in a case where the SCS is 30 kHz (µ = 1), the number Nₛₗₒₜ^{frame, µ} of slots included in one frame may be 20. Furthermore, in a case where the SCS is 60 kHz (µ = 2), the number Nₛₗₒₜ^{frame, µ} of slots included in one frame may be 40. Furthermore, in a case where the SCS is 120 kHz (µ = 3), the number Nₛₗₒₜ^{frame, µ} of slots included in one frame may be 80. Furthermore, in a case where the SCS is 240 kHz (µ = 4), the number Nₛₗₒₜ^{frame, µ} of slots included in one frame may be 160.

One subframe may be 1 ms regardless of the value of the SCS. For example, in a case where the SCS is 15 kHz (µ = 0), the number Nₛₗₒₜ^{subframe, µ} of slots included in one subframe may be one. Furthermore, in a case where the SCS is 30 kHz (µ = 1), the number Nₛₗₒₜ^{subframe, µ} of slots included in one subframe may be two. Furthermore, in a case where the SCS is 60 kHz (µ = 2), the number Nₛₗₒₜ^{subframe, µ} of slots included in one subframe may be four. Furthermore, in a case where the SCS is 120 kHz (µ = 3), the number Nₛₗₒₜ^{subframe, µ} of slots included in one subframe may be eight. Furthermore, in a case where the SCS is 240 kHz (µ = 4), the number Nₛₗₒₜ^{subframe, µ} of slots included in one subframe may be 16.

For a numerology and a carrier, a resource grid with N_{grid, x}^{size, µ} × N_{sc}^{RB} subcarriers and N_{symb}^{subframe, µ} OFDM symbols may be defined. The resource grid may start from a common resource block (CRB) N_{grid}^{start, µ} . N_{grid}^{start, µ} may be indicated from a higher layer parameter. There may be one set of resource grids for each transmission direction. The transmission direction may be an uplink direction, a downlink direction, or a sidelink direction.

For the uplink and the downlink, a bandwidth N_{grid, x}^{size, µ} of the carrier in the SCS configuration µ may be given by carrierBandwidth included in a higher layer parameter SCS-SpecificCarrier. x included in N_{grid,} x^{size, µ} may be downlink (DL), uplink (UL), or sidelink (SL).

A starting position N_{grid}^{start, µ} of the resource grid in the SCS configuration µ may be given by offsetToCarrier included in the higher layer parameter SCS-SpecificCarrier. A frequency location of a subcarrier may refer to a center frequency of the subcarrier. That is, when a frequency interval between the subcarriers is calculated, the frequency interval may be calculated using the interval between the center frequencies of the subcarriers.

Each element included in the resource grid in the SCS configuration µ and an antenna port p may be referred to as a resource element (RE). The resource element may be identified by (k, l)_{p, µ}. Here, k may be an index in a frequency domain. Furthermore, l may represent a symbol position with respect to a reference point in a time domain. The symbol may be an OFDM symbol. The resource elements (k, l)_{p, µ} may correspond to a physical resource and a complex number a_{k, l}^{(p, µ)}.

In the present embodiment, unless otherwise specified, the symbol may mean the OFDM symbol.

A resource block (RB) may be referred to as a common resource block (CRB) or a physical resource block (PRB). The RB may be defined by the CRB and the PRB. The RB may include the CRB and the PRB. One resource block (RB) may be defined by 12 consecutive subcarriers in the frequency domain. That is, the number of consecutive subcarriers included in one RB may be defined as N_{SC}^{RB}, and may be N_{SC}^{RB} = 12. One CRB may be defined by 12 consecutive subcarriers in the frequency domain.

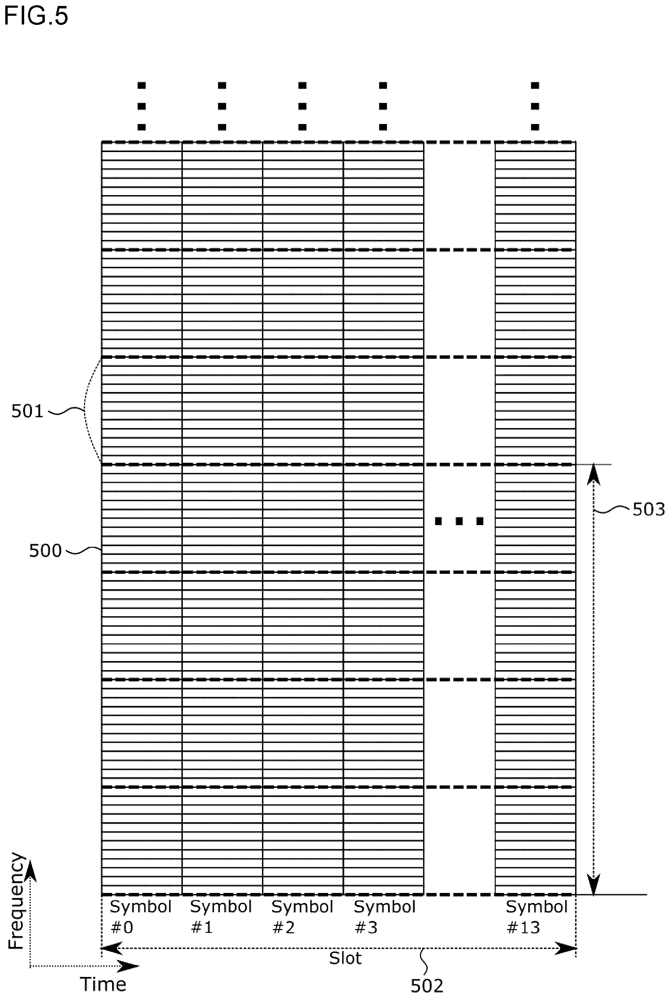

Fig. 5 is a diagram illustrating an example of the resource grid according to the present embodiment. A horizontal axis of the drawing indicates the time domain, and a vertical axis indicates the frequency domain. A reference numeral 500 denotes one subcarrier. Furthermore, a reference numeral 501 denotes one PRB including 12 subcarriers. A reference numeral 502 denotes one slot including 14 symbols.

Scheduling may mean that the base station apparatus 1 secures a resource the terminal device 1 uses to transmit and/or receive a physical signal. For example, in order for the terminal device 1 to receive PDSCH transmitted from the base station apparatus 1, the base station apparatus 1 may schedule four PRBs of a reference numeral 503 included in symbol #0, symbol #1, and symbol #2 in Fig. 5 to the terminal device 1. That is, the resource secured (scheduled) for the terminal device 1 to receive the PDSCH may be an area where symbol #0, symbol #1, symbol #2, and the reference numeral 503 intersect.

In the present embodiment, it can also be said that scheduling means to schedule.

Unless otherwise specified in the present disclosure, "A and B are transmitted at the same time" may mean that A and B are transmitted at the same time in one or more same OFDM symbols in a slot.

Point A may serve as a common reference point of the resource grid. The resource grid may be a resource block grid. Point A may be given based on a higher layer parameter offsetToPointA. Point A may be given based on a higher layer parameter absoluteFrequencyPointA.

For the SCS configurations µ, CRBs may be numbered in an increasing order from zero in the frequency domain. A lower-numbered CRB may be located in a lower frequency domain. For example, CRB #n may be located in a frequency domain lower than CRB #n+1. In the present embodiment, the nth CRB is also referred to as CRB #n. For the SCS configuration µ, the center of subcarrier #0 included in CRB #0 may be Point A.

In the SCS configuration µ, a relationship between a CRB number n_{CRB}^{µ} and a resource element (k, l) in the frequency domain may be n_{CRB}^{µ} = floor (k/N_{SC}^{RB}). Here, k may be associated with Point A. That is, when k = 0, the center frequency of the subcarrier may be located at Point A. Furthermore, floor (x1) is a function that outputs the greatest integer among integers identical to or smaller than x1. For example, an output of floor (1.2) is one. An output of floor (2.99) is two. An output of floor (3) is three.

In the SCS configuration µ, the PRB may be defined in a bandwidth part (BWP). That is, a physical resource block configuring the BWP may be a PRB. For example, the base station apparatus 1 may configure reference numeral 503 as the BWP in the terminal device 1. The PRBs may be numbered (or indexed) from zero to (N_{BWP, i}^{size, µ}-1). That is, the index of the PRB including the lowest frequency among the PRBs included in a BWP may be zero, the index of the PRB including the highest frequency may be N_{BWP, i}^{size, µ}-1, and the index of the PRB between PRB #0 and PRB #N_{BWP, i}^{size, µ}-1 may be given in an increasing order. Here, N_{BWP, i}^{size, µ} may be the number of PRBs configuring the BWP in the SCS configuration µ. In the present embodiment, the nth PRB is also referred to as PRB #n.

The BWP may be a subset of consecutive CRBs for a numerology µᵢ set in the ith BWP in a component carrier. The BWP may include one or more consecutive CRBs. The BWP may include one or more consecutive PRBs.

The BWP in the downlink may be referred to as a downlink BWP (DL BWP). The maximum four DL BWPs may be configured in the downlink for the terminal device 1. Among the maximum four DL BWPs, one DL BWP may be activated at a certain time. The terminal device 1 may not be expected to receive PDSCH, PDCCH, or CSI-RS outside the range of the activated DL BWP. The terminal device 1 may be expected to receive PDSCH, PDCCH, or CSI-RS in RB included in the activated DL BWP.

The BWP in the uplink may be referred to as an uplink BWP (UL BWP). The maximum four UL BWPs may be configured in the uplink for the terminal device 1. Among the maximum four UL BWPs, one UL BWP may be activated at a certain time. The terminal device 1 may not transmit PUSCH or PUCCH outside the range of the activated UL BWP. The terminal device 1 may transmit PUSCH or PUCCH in RB included in the activated UL BWP. In an activated cell, the terminal device 1 may not transmit the SRS outside the range of the activated BWP.

The transport channel may be a channel that transfers information between a physical layer and the MAC layer. A downlink transport channel may include at least a broadcast channel (BCH), a downlink shared channel (DL-SCH), a paging channel (PCH), an uplink shared channel (UL-SCH), a random access channel (RACH), a sidelink broadcast channel (SL-BCH), and a sidelink shared channel (SL-SCH).

The BCH may be used in a case where a single message or a BCH instance that differs depending on beamforming is broadcast to all the areas of a cell. The size of the BCH may be fixed. The BCH may use a pre-defined format.

The DL-SCH may be used to transmit user data, control information, higher layer parameters, or DL system information. The DL-SCH may support HARQ. The DL-SCH may support dynamic link adaptation by changing a modulation scheme, coding, transmission power, and the like. Furthermore, the DL-SCH may be broadcast to all the cells. Furthermore, the DL-SCH may use beamforming. The DL-SCH may support dynamic and/or semi-static resource allocation.

The PCH may support discontinuous reception (DRX) that enables power saving of the terminal device 1 (UE power saving). The PCH may be used in a case where a single message or a BCH instance that differs depending on beamforming are broadcast to all the areas of a cell.

The base station apparatus 1 may transmit a physical broadcast channel (PBCH) including a master information block (MIB) to the terminal device 1 in the downlink.

The physical downlink control channel (PDCCH) may be used to schedule downlink transmission (DL transmission) on the physical downlink shared channel (PDSCH), or may be used to schedule uplink transmission (UL transmission) on the physical uplink shared channel (PUSCH). The PDCCH may include downlink control information (DCI).

The PDSCH may be a physical channel that carries the DL-SCH. The DL-SCH may be coded. The PDSCH may be used to transmit one or two transport blocks (TB). PDSCH transmission may be assigned together with a reference signal in which the DCI included in the PDCCH includes DMRS. The PDSCH may be decoded based on at least information included in the PDCCH. That is, the time and frequency domain resources for the PDSCH, the modulation scheme, and the number of layers may be determined based on at least information included in the PDCCH. The PDSCH transmission may be performed by using two or more and 14 or less OFDM symbols. The number of layers for the PDSCH transmission may be eight or less. For the PDSCH transmission, HARQ feedback or retransmission may be supported.

The terminal device 1 may transmit Preamble to the base station apparatus 1 by using a physical random access channel (PRACH). In each PRACH occasion, 64 Preambles may be defined. The PRACH occasion may be defined by the time domain and the frequency domain. The length of Preamble may include at least four different lengths. The Preamble may be referred to as PRACH preamble. The PRACH preamble may have one or more PRACH formats. Each of the PRACH formats may have one or more PRACH preamble sequences. Each of the PRACH formats may be defined in one or more PRACH OFDM symbols. Each of the PRACH formats may be defined with a different CP length and/or a different guard time. The configuration of the PRACH preamble may be provided to the terminal device 1 through system information.

The PUCCH may be used to carry uplink control information (UCI).

The UCI may include some or all of Hybrid Automatic Repeat reQuest-ACKnowledgement (HARQ-ACK) information, a scheduling request (SR), and/or channel state information (CSI). The UCI may be carried on the PUCCH or the PUSCH. A scheme of channel coding may be different depending on the number of bits of the UCI.

In HARQ-ACK feedback of the PDSCH corresponding to a DCI, a PUCCH resource set including one or more PUCCH resources may be configured. One PUCCH resource may be determined based on at least a UCI payload size and a PUCCH resource indicator (PRI) field included in DL Assignment. In a case where a plurality of the PUCCHs are overlapped in the time domain, one or more pieces of UCI included in a plurality of the PUCCHs may be multiplexed into one PUCCH. In a case where the PUCCH and the PUSCH are overlapped in the time domain, the UCI included in the PUCCH may be multiplexed into the PUSCH.

The PUCCH resource may be a resource for transmitting the UCI in the time domain and/or frequency domain. The PUCCH resource may be configured in a PUCCH format. A PUCCH format 0 may be used to transmit UCI of two bits or less by using one or two OFDM symbols. A PUCCH format 1 may be used to transmit UCI of two bits or less by using four or more and 14 or less OFDM symbols. A PUCCH format 2 may be used to transmit UCI greater than two bits by using one or two OFDM symbols. A PUCCH format 3 may be used to transmit UCI greater than two bits by using four or more and 14 or less OFDM symbols. A PUCCH format 4 may be used to transmit UCI greater than two bits by using four or more and 14 or less OFDM symbols.

The PUSCH may be a physical channel that carries the UL-SCH. The PUSCH may be a physical channel that carries the UCI. The PUSCH may be used to transmit one transport block (TB). PUSCH transmission may be scheduled together with a reference signal in which the DCI included in the PDCCH includes DMRS. The PUSCH may be decoded based on at least information included in the PDCCH. That is, the time and frequency domain resources for the PUSCH, the modulation scheme, and the number of layers may be determined based on at least information included in the PDCCH. The number of layers for the PDSCH transmission may be four or less. For the PDSCH transmission, HARQ retransmission may be supported.

The DMRS may be used to measure a state of a communication channel. The DMRS may be a signal different for each user. Note that information for specifying the user may be included when the DMRS is generated. The DMRS may be transmitted simultaneously with the PUCCH. The DMRS may be transmitted simultaneously with the PUSCH. The DMRS may be transmitted simultaneously with the PDSCH. The DMRS may be transmitted simultaneously with the PDCCH. The DMRS may be transmitted simultaneously with the PBCH.

PTRS may be used to measure a phase noise in the communication channel. The PTRS may be transmitted simultaneously with the PUSCH. The PTRS may be transmitted simultaneously with the PDSCH. The PTRS may be associated with one DMRS port.

The SRS may be different for each terminal device (UE-specific). The SRS may be transmitted using one OFDM symbol, two OFDM symbols, or four OFDM symbols, which is consecutive in a slot.

A positioning reference signal (PRS) may be transmitted simultaneously with the PDSCH, may be transmitted simultaneously with the PDCCH, or may be transmitted simultaneously with any of the transmission channels in the downlink. One or more downlink PRS positioning frequency layers may be configured for one terminal device 1. The PRS positioning frequency layer may be configured by one or more PRS resource sets. The PRS resource set may be configured by one or more PRS resources.

The CSI-RS may be transmitted in the downlink. One or more CSI reports corresponding to a CSI-RS may be configured. A plurality of the terminal devices may share one CSI-RS. The resource for the CSI-RS in the time domain may be configured in any OFDM symbol in one slot. The resource for the CSI-RS in the time domain may be configured in one OFDM symbol, two OFDM symbols, or four OFDM symbols. The CSI-RS may be configured with 32 antenna ports. The base station apparatus 1 may transmit the CSI-RS to the terminal device 1 periodically, semi-persistently, or aperiodically.

Channel estimation in the terminal device 1 may be performed based on at least a reference signal transmitted from the base station apparatus 1. The reference signal transmitted from the base station apparatus 1 may be a demodulation reference signal (DMRS), a PTRS, a CSI-RS, or an SSB. The reference signal is a known signal which a transmitter and a receiver recognize. That is, the receiver may be capable of recognizing in advance what reference signal is transmitted from the transmitter.

Channel estimation in the base station apparatus 1 may be performed based on at least a reference signal transmitted from the terminal device 1. The reference signal transmitted from the terminal device 1 may be a demodulation reference signal (DMRS), a PTRS, or an SRS.

An example of the channel estimation will be described. The reference signals transmitted from the base station apparatus 1 and the terminal device 1 may be expressed in a form of a complex number that is a combination of a real number and an imaginary number. For example, in a case where the reference signal to be transmitted is 1 + 2j and the reference signal is received through the communication channel, the reference signal is set to 0.5 + 2j. The receiver installed in the base station apparatus 1 and/or the terminal device 1 compares the transmitted reference signal with the received reference signal in the time domain and/or the frequency band to estimate channel information, and then perform correction processing on the received signal based on the estimation result of the channel information.

The real number may be a number which is the same as or greater than zero when a certain number is multiplied by the number itself. That is, the real number may be a positive number including zero when a certain number is multiplied by the number itself. For example, in the result of multiplying a certain number A by the number itself (A x A), when A x A > = 0, A is the real number. Here, X > = Y means that X is the same as or greater than Y. Furthermore, the imaginary number may be a number which is the same as or smaller than zero when a certain number is multiplied by the number itself. That is, the imaginary number may be a negative number obtained when a certain number is multiplied by the number itself. For example, in the result of multiplying a certain number B by the number itself (B x B), when B x B < 0, B is the imaginary number. Here, X < Y means that X is smaller than Y. In order to distinguish between the real number and the imaginary number, j may be added to the imaginary number. For example, 2j may be an imaginary number. Furthermore, 2j x 2j may be -4.

The base station apparatus 1 and/or the terminal device 1 may perform channel estimation by using a channel model. The base station apparatus 1 and/or the terminal device 1 may assist the channel estimation by using the channel model. The base station apparatus 1 and/or the terminal device 1 may perform positioning by using the channel model. The base station apparatus 1 and/or the terminal device 1 may assist positioning by using the channel model.

The base station apparatus 1 and/or the terminal device 1 may perform the channel estimation by using artificial intelligence and/or machine learning (AI/ML). The base station apparatus 1 and/or the terminal device 1 may assist the channel estimation by using the AI/ML. The base station apparatus 1 and/or the terminal device 1 may perform positioning by using the AI/ML. The base station apparatus 1 and/or the terminal device 1 may assist positioning by using the AI/ML.

The channel model may be created using the AI/ML. The channel model may be created by performing training. The artificial intelligence may be capability of a device, such as the base station apparatus 1 and/or the terminal device 1, which determines and/or analyzes a situation by itself. The machine learning may be used to find a pattern of data collected by the base station apparatus 1 and/or the terminal device 1 based on the collected data.

The base station apparatus 1 may instruct the terminal device 1 to perform training for the AI/ML. The base station apparatus 1 may trigger the terminal device 1 to perform training for the AI/ML. In the present embodiment, instructing training for the AI/ML is also defined as instructing training or triggering training.

The base station apparatus 1 may instruct the terminal device 1 to perform training by using a higher layer parameter trainingType. The trainingType may be configured as aperiodic, semi-persistent, periodic, or instantaneous.

In a case where the higher layer parameter trainingType is configured as aperiodic, the base station apparatus 1 may trigger the terminal device 1 to perform training by using the DCI. In a case where the higher layer parameter trainingType is configured as aperiodic, the base station apparatus 1 may trigger the terminal device 1 to perform training by using a field included in the DCI. In a case where the higher layer parameter trainingType is configured as aperiodic, the terminal device 1 may start training from Xₛₗₒₜ slot number, or from a slot number configured with a higher layer parameter trainingSlotOffset, with reference to the slot in which the PDCCH including the DCI is received. Here, Xₛₗₒₜ may be an integer that is the same as or greater than zero. For example, in a case where the Xₛₗₒₜ is zero, the terminal device 1 may start training from the slot in which the PDCCH including the DCI is received.

In a case where the higher layer parameter trainingType is configured as aperiodic, the terminal device 1 may perform training among X_{duration} slots including the slot in which the training is started. Here, X_{duration} may be an integer that is the same as or greater than zero. For example, in a case where X_{duration} is three, the terminal device 1 may perform the training during a time of three slots including the slot in which the training is started. In a case where the higher layer parameter trainingType is configured as aperiodic, the terminal device 1 may perform training in the slot numbers configured with the higher layer parameter trainingDuration. The slot numbers may include the slot in which the training is started.

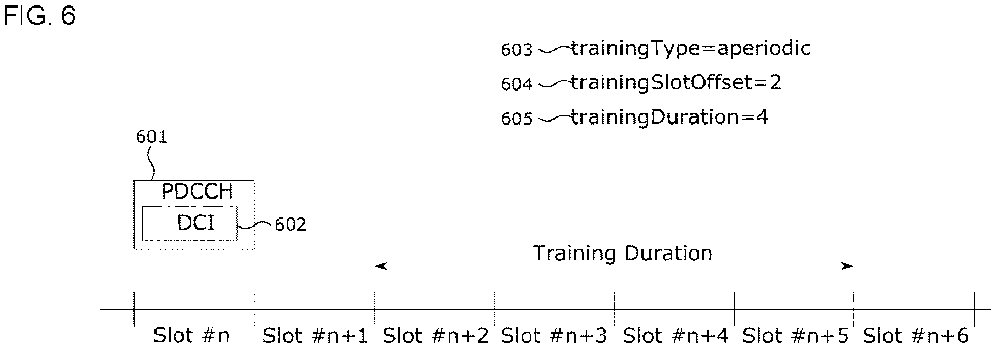

Fig. 6 is a diagram illustrating an example of a training method in a case where the higher layer parameter trainingType is configured as aperiodic in the present embodiment. The terminal device 1 receives PDCCH 601 including DCI 602 from the base station apparatus 1. The DCI 602 has information for instructing the start of training. A higher layer parameter trainingType 603 is configured as aperiodic. A higher layer parameter trainingSlotOffset 604 is configured as two. A higher layer parameter trainingDuration 605 is configured as four. Since two is configured by trainingSlotOffset 604, the terminal device 1 may start training in Slot #n+2 which is after two slots from a slot Slot #n which has received the PDCCH 601. Furthermore, in the training duration, since trainingDuration 605 is configured as four, the training may be performed in four slots. That is, in Fig. 6, the terminal device 1 may perform training from Slot #n+2 to Slot #n+5.

In a case where the higher layer parameter trainingType is configured as semi-persistent, the base station apparatus 1 may trigger the terminal device 1 to perform training by using the DCI. In a case where the higher layer parameter trainingType is configured as semi-persistent, the base station apparatus 1 may trigger the terminal device 1 to perform training by using a field included in the DCI. In a case where the higher layer parameter trainingType is configured as semi-persistent, the terminal device 1 may start training from Xₛₗₒₜ slot, or from a slot number configured with a higher layer parameter trainingSlotOffset, with reference to the slot in which the PDCCH including the DCI is received. Here, Xₛₗₒₜ may be an integer that is the same as or greater than zero. For example, in a case where the Xₛₗₒₜ is zero, the terminal device 1 may start training from the slot in which the PDCCH including the DCI is received.

In a case where the higher layer parameter trainingType is configured as semi-persistent, the terminal device 1 may perform training based on a training period provided by the higher layer parameter trainingPeriod and a training duration provided by the higher layer parameter trainingDuration. The training period may be indicated in units of slot, units of symbol, or units of frame. The training period may be a value representing a time. The training duration may be indicated in units of slot, units of symbol, or units of frame. The training duration may be a value representing a time.

In a case where the higher layer parameter trainingType is configured as semi-persistent, the base station apparatus 1 may instruct the terminal device 1 to end training by using the DCI. In a case where the higher layer parameter trainingType is configured as semi-persistent, the base station apparatus 1 may instruct the terminal device 1 to end training by using a field included in the DCI. In a case where the higher layer parameter trainingType is configured as semi-persistent, the terminal device 1 may end training from X_{slotFinish} slot, or from a slot number configured with a higher layer parameter trainingFinishSlotOffset, with reference to the slot in which the PDCCH including the DCI is received. Here, X_{slotFinish} may be an integer that is the same as or greater than zero. For example, in a case where the X_{slotFinish} is zero, the terminal device 1 may end training from the slot in which the PDCCH including the DCI is received.

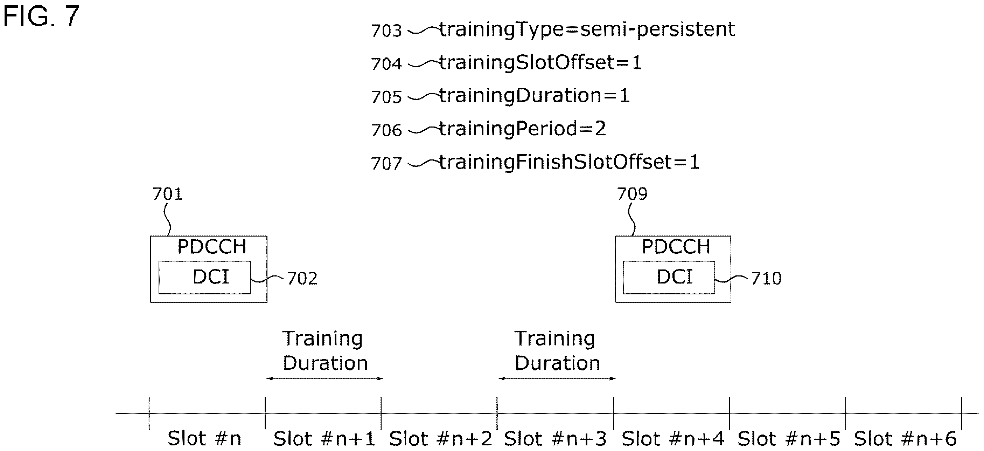

Fig. 7 is a diagram illustrating an example of a training method in a case where the higher layer parameter trainingType is configured as semi-persistent in the present embodiment. The terminal device 1 receives PDCCH 701 including DCI 702 from the base station apparatus 1. The DCI 702 has information for instructing the start of training. A higher layer parameter trainingType 703 is configured as semi-persistent. A higher layer parameter trainingSlotOffset 704 is configured as one. A higher layer parameter trainingDuration 705 is configured as one. Since one is configured by trainingSlotOffset 704, the terminal device 1 may start training in Slot #n+1 which is after one slot from a slot Slot #n which has received the PDCCH 701. Furthermore, in the training duration, since trainingDuration is configured as one, the training may be performed in one slot. That is, in Fig. 7, the terminal device 1 may perform training in Slot #n+1. Note that since a higher layer parameter trainingPeriod 706 is configured by two, the terminal device 1 may perform training with two slots as a period, based on trainingDuration 705. That is, the terminal device 1 may perform training in Slot #n+3.

The terminal device 1 receives PDCCH 709 including DCI 710 instructing the end of training through Slot #n+4. The DCI 710 has information for instructing the end of training. A higher layer parameter trainingFinishSlotOffset is configured as one. Since one is configured by trainingFinishSlotOffset, the terminal device 1 may end training in Slot #n+5 which is after one slot from a slot Slot #n+4 which has received the PDCCH 709.

In a case where the higher layer parameter trainingType is configured as periodic, the terminal device 1 may start training from when RRC is connected. In a case where the higher layer parameter trainingType is configured as periodic, the terminal device 1 may start training from Xₛₗₒₜ slot number, or from a slot number configured with a higher layer parameter trainingSlotOffset, with reference to the slot when the RRC is connected. Here, Xₛₗₒₜ may be an integer that is the same as or greater than zero. For example, in a case where the Xₛₗₒₜ is zero, the terminal device 1 may start training from the slot when the RRC is connected.

In a case where the higher layer parameter trainingType is configured as periodic, the terminal device 1 may perform training based on a training period provided by the higher layer parameter trainingPeriod and a training duration provided by the higher layer parameter trainingDuration. The training period may be indicated in units of slot, units of symbol, or units of frame. The training period may be a value representing a time. The training duration may be indicated in units of slot, units of symbol, or units of frame. The training duration may be a value representing a time.

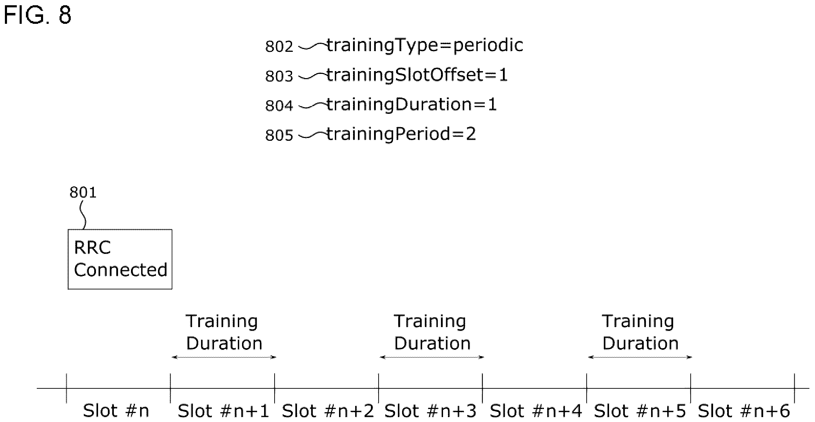

Fig. 8 is a diagram illustrating an example of a training method in a case where the higher layer parameter trainingType is configured as periodic in the present embodiment. In Slot #n, RRC is in a connected state. A higher layer parameter trainingType 802 is configured as periodic. A higher layer parameter trainingSlotOffset 803 is configured as one. A higher layer parameter trainingDuration 804 is configured as one. Since one is configured by trainingSlotOffset 803, the terminal device 1 may start training in Slot #n+1 which is after one slot from a slot Slot #n which has received the PDCCH 701. Furthermore, in the training duration, since trainingDuration 804 is configured as one, the training may be performed in one slot. That is, the terminal device 1 may perform training in Slot #n+1. Note that since a higher layer parameter trainingPeriod 805 is configured by two, the terminal device 1 may perform training with two slots as a period, based on trainingDuration 804. That is, in Fig. 8, the terminal device 1 may perform training in Slot #n+3, Slot #n+5, and Slot #n+2*x1+1. Here, * may be a multiplication. x1 may be a value configured as trainingPeriod.

In a case where the higher layer parameter trainingType is configured as instantaneous, the terminal device 1 may start training based on a trigger counter. That is, when a value of the trigger counter is the same as or greater than a threshold X_{threadshold}, the terminal device 1 may start training. The threshold X_{threadshold} may be an integer greater than zero, or may be given as a higher layer parameter trainingThreshold. Furthermore, the trigger counter may be counted from zero. Note that, when training is started, the trigger counter may be reset to zero.

The trigger counter may be counted based on the number of NACKs transmitted from the terminal device 1 to the base station apparatus 1 in a HARQ process related to the PDSCH received by the terminal device 1. The trigger counter may be counted based on initial transmission and/or retransmission of the PDSCH. The trigger counter may be counted based on a new data indicator (NDI). The trigger counter may be counted based on a redundancy version (RV).

For example, when decoding of a certain PDSCH received by the terminal device 1 fails, the terminal device 1 may generate NACK in the HARQ process for the PDSCH and increment the value of the trigger counter by one. For example, when the NDI included in the DCI including UL grant indicates retransmission, the terminal device 1 may increment the value of the trigger counter by one.

In a case where the higher layer parameter trainingType is configured as instantaneous, the terminal device 1 may perform training based on the training duration provided by the higher layer parameter trainingDuration. The training period may be indicated in units of slot, units of symbol, or units of frame. The training period may be a value representing a time. The training duration may be indicated in units of slot, units of symbol, or units of frame. The training duration may be a value representing a time.

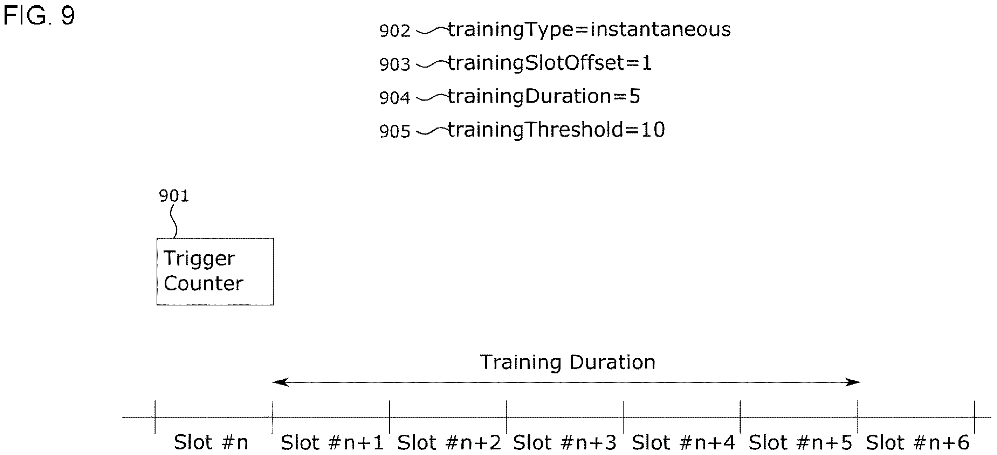

Fig. 9 is a diagram illustrating an example of a training method in a case where the higher layer parameter trainingType is configured as instantaneous in the present embodiment. An initial value of the trigger counter may be zero. A higher layer parameter trainingType 902 is configured as instantaneous. A higher layer parameter trainingFinishSlotOffset 903 is configured as one. A higher layer parameter trainingDuration 904 is configured as five. A higher layer parameter trainingThreshold 905 is configured as ten. In a case where a trigger counter 901 is counted to reach ten, one is configured by trainingSlotOffset 903, and thus the terminal device 1 may start training in Slot #n+1 which is after one slot from a slot Slot #n in which the trigger counter 901 reaches ten. When training is started, the trigger counter may be reset to zero. Furthermore, in the training duration, since trainingDuration 904 is configured as five, the training may be performed in five slots. That is, in Fig. 9, the terminal device 1 may perform training from Slot #n+1 to Slot #n+5.

As described above, an aspect of the present disclosure can instruct start and/or end of the training between the terminal device 1 and the base station apparatus 1. Accordingly, the terminal device 1 can efficiently perform training.

Hereinafter, aspects of various devices according to the aspect of the present embodiment will be described.
(1) In order to achieve the above-described object, aspects of the present disclosure take the following measures. That is, according to a first aspect of the present disclosure, there is provided a terminal device including: a reception unit that receives a signal for instructing start of training; and a transmission unit that transmits training data, in which the signal for instructing the start of the training includes a training start timing and a training period, and in a case where the signal for instructing the start of the training is received, the training data is generated based on the training start timing and the training period.
(2) According to a second aspect of the present disclosure, there is provided a base station apparatus including: a transmission unit that transmits a signal for instructing start of training; and a reception unit that receives training data, in which the signal for instructing the start of the training includes a training start timing and a training period, and in a case where the signal for instructing the start of the training is transmitted, the training data is instructed to be generated based on the training start timing and the training period.
(3) According to a third aspect of the present disclosure, there is provided a communication method used in a terminal device, in which a processing unit that processes a signal for instructing start of training and a processing unit that processes training data are provided, the signal for instructing the start of the training includes a training start timing and a training period, and in a case where the signal for instructing the start of the training is received, the training data is generated based on the training start timing and the training period.
(4) According to a fourth aspect of the present disclosure, there is provided a communication method used in a base station apparatus, in which a processing unit that processes a signal for instructing start of training and a processing unit that processes training data are provided, the signal for instructing the start of the training includes a training start timing and a training period, and in a case where the signal for instructing the start of the training is transmitted, the training data is instructed to be generated based on the training start timing and the training period.

A program that is operated in the base station apparatus 1 and the terminal device 1 according to an aspect of the present disclosure may control a central processing unit (CPU) or the like so as to implement functions of the above-described embodiments according to an aspect of the present disclosure.

### [INDUSTRIAL APPLICABILITY]

The present disclosure relates to an instruction from a base station apparatus causing a terminal device to start artificial intelligence and/or machine learning.

### [REFERENCE SIGNS LIST]

100, 101 base station apparatus 1, 102, 103, 104 terminal device 1 (terminal device 1A, terminal device 1B, terminal device 1C), 200 higher layer processing unit, 201 baseband processing unit, 202 RF unit

## Claims

1. A terminal device comprising:
a reception unit that receives a signal for instructing start of training; and a transmission unit that transmits training data,
wherein the signal for instructing the start of the training includes a training start timing and a training period, and
in a case where the signal for instructing the start of the training is received, the training data is generated based on the training start timing and the training period.

2. A base station apparatus comprising:
a transmission unit that transmits a signal for instructing start of training; and a reception unit that receives training data,
wherein the signal for instructing the start of the training includes a training start timing and a training period, and
in a case where the signal for instructing the start of the training is transmitted, the training data is instructed to be generated based on the training start timing and the training period.

3. A communication method used in a terminal device, wherein a processing unit that processes a signal for instructing start of training and a processing unit that processes training data are provided,
the signal for instructing the start of the training includes a training start timing and a training period, and
in a case where the signal for instructing the start of the training is received, the training data is generated based on the training start timing and the training period.

4. A communication method used in a base station apparatus, wherein a processing unit that processes a signal for instructing start of training and a processing unit that processes training data are provided,
the signal for instructing the start of the training includes a training start timing and a training period, and
in a case where the signal for instructing the start of the training is transmitted, the training data is instructed to be generated based on the training start timing and the training period.
